# EUROPÄISCHE PATENTANMELDUNG

(11) **EP 4 775 557 A1**
(43) Veröffentlichungstag der Anmeldung: **15.07.2026**
(21) Anmeldenummer: 25151526.8
(22) Anmeldetag: 13.01.2025
(51) Int. Cl.: C04B 26/06, C04B 26/14, C04B 26/16, C04B 40/00

(54) **HÄRTERZUSAMMENSETZUNG FÜR RADIKALISCH HÄRTBARE VERBINDUNGEN UND DEREN VERWENDUNG**

(71) Anmelder: Hilti Aktiengesellschaft, 9494 Schaan (LI)
(72) Erfinder: Kumru, Memet-Emin, 86199 Augsburg (DE); Rajnai, Monika, 86316 Friedberg (DE)
(74) Vertreter: Hilti Aktiengesellschaft Corporate Intellectual Property

(57) **Zusammenfassung**

Es wird eine Härterzusammensetzung für ein Reaktivharzsystem zur chemischen Befestigung auf Basis einer radikalisch härtbaren ungesättigten Verbindung beschrieben, welche ein Härtungsmittel für die radikalisch härtbare ungesättigte Verbindung, eine Verbindung, die aus der Gruppe bestehend aus Thiolen, Thioharnstoffen und bifunktionellen, primären aliphatischen Aminen ausgewählt ist, und ein Metall, in elementarer Form oder in Form einer Metallverbindung, umfasst und welche dadurch gekennzeichnet ist, dass das Härtungsmittel ein Peroxid ist, welches entweder flüssig ist oder in einem organischen Lösungsmittel gelöst vorliegt.

## Beschreibung

Die vorliegende Erfindung betrifft eine Härterzusammensetzung für eine mindestens zweikomponentige Mörtelmasse auf Basis radikalisch härtbarer ungesättigter Verbindungen für die chemische Befestigungstechnik und ihre Verwendung als Härterbestandteil einer Zwei- oder mehrkomponentigen Mörtelmasse für die Befestigung von Konstruktionselementen in festem Untergrund, insbesondere von Ankerstangen, Betoneisen oder dergleichen in Bohrlöchern in Beton oder Stein zur Verbesserung der Haftung eines ausgehärteten Reaktivharzsystems auf Basis radikalisch härtbarer ungesättigter Verbindungen auf feuchten und trockenen mineralischen Oberflächen.

Die Verwendung von Harzmischungen auf Basis radikalisch härtbarer Verbindungen oder auf Epoxidharzbasis ist seit langem bekannt. Im Bereich der Befestigungstechnik hat sich die Verwendung von Harzmischungen als organisches Bindemittel in der chemischen Befestigungstechnik durchgesetzt. Es handelt sich dabei häufig um Zweikomponentensysteme, wobei die eine Komponente, häufig auch A-Komponente genannt, die Harzmischung und die andere Komponente, häufig auch B-Komponente genannt, das Härtungsmittel enthält. Andere, übliche Bestandteile wie Füllmittel, Beschleuniger, Stabilisatoren, Thixotropiermittel, Phlegmatisierungsmittel, Lösungsmittel einschließlich Reaktivlösungsmittel können in der einen und/oder der anderen Komponente enthalten sein. Durch Vermischen der beiden Komponenten wird dann durch Radikalbildung die Reaktion in Gang gebracht und das Harz zum Duromeren gehärtet.

Radikalisch härtende Systeme, insbesondere bei Raumtemperatur härtende Systeme benötigen sogenannte Radikalstarter, auch Initiatoren genannt, damit die radikalische Polymerisation ausgelöst werden kann. Im Bereich der chemischen Befestigungstechnik haben sich aufgrund ihrer Eigenschaften die in der Anmeldung DE 3226602 A1 beschriebene Härterzusammensetzung, umfassend Dibenzoylperoxid als Radikalstarter und ein Amin als Beschleuniger, und die in der Anmeldung EP 1586569 A1 beschriebene Härterzusammensetzung, umfassend einen Perester als Härter und eine Metallverbindung als Beschleuniger, durchgesetzt. Diese Härterzusammensetzungen erlauben auch bei sehr tiefen Temperaturen bis -30°C eine schnelle und recht vollständige Aushärtung. Darüber hinaus sind diese Systeme hinsichtlich der Mischungsverhältnisse von Harz und Härter sehr robust. Somit sind sie für die Verwendung unter Baustellenbedingungen geeignet.

Nachteilig an diesen Härterzusammensetzungen jedoch ist, dass in beiden Fällen Peroxide als Radikalstarter verwendet werden müssen. Diese sind thermisch sensibel und sehr empfindlich auf Verunreinigungen. Dies führt zu erheblichen Einschränkungen bei der Formulierung von pastösen Härterkomponenten vor allem für Injektionsmörtel hinsichtlich Lagertemperaturen, Lagerstabilitäten und der Auswahl geeigneter Komponenten. Um den Einsatz von Peroxiden, wie Dibenzoylperoxid, Perestern und dergleichen, zu ermöglichen, werden zu deren Stabilisierung Phlegmatisierungsmittel, wie Phthalate oder Wasser zugegeben. Diese beeinträchtigen jedoch die mechanische Leistung von Harzmischungen bei Verwendung beispielsweise als Reaktivharzmörtel für die chemische Befestigung.

Dennoch enthalten kommerzielle Produkte meist Dibenzoylperoxid, ein festes Peroxid, welches mit Wasser phlegmatisiert wird und üblicherweise als wässrige Suspension eingesetzt wird.

Die Erfinder haben herausgefunden, dass die Kombination aus Dibenzoylperoxid und Wasser, die als Suspension vorliegt, die Haftfestigkeiten und die Lastwerte von chemischen Mörtelmassen, negativ beeinflusst. Aber auch die Verwendung von mit organischen Lösungsmitteln phlegmatisiertem Dibenzoylperoxid vermag die negativen Einflüsse nicht vollständig auszuschließen. Zwar verbessert sich die Haftung auf trocknem mineralischem Untergrund, jedoch nicht auf feuchtem mineralischem Untergrund.

Die bekannten Systeme auf Epoxidharzbasis, insbesondere bei Raumtemperatur härtende Systeme benötigen Verbindungen, die mit Epoxiden reagieren damit die Polymerisation ausgelöst werden kann. Im Bereich der chemischen Befestigungstechnik haben sich Systeme mit Aminen und Mannichbasen als Härtungsmittel durchgesetzt. Diese Systeme haben gegenüber den radikalisch härtenden Systemen den Vorteil, dass sie sowohl auf trockenen als auch auf feuchten Oberflächen besser haften. Somit sind sie ebenfalls für die Verwendung unter verschiedenen Baustellenbedingungen geeignet.

Die Versuche, die positiven Eigenschaften der bekannten Mörtelsysteme, also die schnelle Aushärtung und die Robustheit der radikalisch härtenden Systeme und die hervorragende Haftung der Systeme auf Epoxidharzbasis haben bisher nicht zum Ziel geführt.

Die Aufgabe der vorliegenden Erfindung besteht somit darin, eine Härterzusammensetzung für eine mindestens zweikomponentige Mörtelmasse auf Basis radikalisch härtbarer ungesättigter Verbindungen für die chemische Befestigungskomponente bereitzustellen, mit der es in einfacher Weise gelingt, die Haftung von ausgehärteten Mörtelmassen auf Basis radikalisch härtbarer ungesättigter Verbindungen sowohl auf trockenem als auch auf feuchtem mineralischen Untergrund Beton deutlich zu verbessern. Somit gelingt es, die positiven Eigenschaften der radikalisch härtbaren Systeme, also deren gute Haftungseigenschaften, an die der Systeme auf Epoxidharzbasis anzunähern und Vorteile beider Systeme zu vereinen.

Es hat sich gezeigt, dass diese Aufgabe überraschenderweise dadurch gelöst werden kann, dass ein flüssiges Härtungsmittel oder in einem geeigneten organischen Lösungsmittel gelöstes Härtungsmittel verwendet wird.

Die Erfindung beruht auf der Erkenntnis, dass die Zustandsform (Aggregatzustand) in der das verwendeten Härtungsmittel, nämlich das Peroxid, eingesetzt wird, einen großen Einfluss auf die Haftung des Mörtels hat. Die Verwendung von flüssigen Peroxiden oder in geeigneten Lösungsmitteln, ausgenommen Wasser, gelösten Peroxiden als Härtungsmittel führt zu besserer Haftung sowohl auf trockenen als auch auf feuchten mineralischen Untergründen.

Gegenstand der Erfindung ist daher die Härterzusammensetzung gemäß Anspruch 1. Die Unteransprüche 2 bis 4 betreffen bevorzugte Ausführungsformen dieses Erfindungsgegenstandes. Ein weiterer Gegenstand ist eine zwei- oder mehrkomponentiges Reaktivharzsystem gemäß Anspruch 5. Die Unteransprüche 6 bis 10 betreffen bevorzugte Ausführungsformen dieses Erfindungsgegenstandes. Ein noch weiterer Gegenstand ist die Verwendung gemäß Anspruch 11. Der Unteranspruch 12 betrifft bevorzugte Ausführungsformen dieses Erfindungsgegenstandes.

Zum besseren Verständnis der Erfindung werden die folgenden Erläuterungen der hierin verwendeten Terminologie als sinnvoll erachtet. Im Sinne der Erfindung bedeuten:
- "*Reaktivharz",* auch "*Basisharz"* genannt, eine üblicherweise feste oder hochviskose *"radikalisch härtbare",* d.h. polymerisierbare Verbindung, welche durch Polymerisation härtet und eine Harzmatrix bildet; das Reaktivharz ist das Umsetzungsprodukt einer Bulkreaktion an sich; hiervon ist auch der Reaktionsansatz zur Herstellung des Backbone-Harzes nach beendeter Reaktion umfasst, der ohne Isolierung des Produkts vorliegt und daher neben der radikalisch härtbaren Verbindung, das Reaktivharz, einen Reaktivverdünner, einen Stabilisator und einen Katalysator, sofern verwendet, enthalten kann;
- "*Inhibitor"* ebenfalls eine zur Inhibierung der Polymerisationsreaktion (Härtung) fähige Verbindung, die dazu dient, die Polymerisationsreaktion und damit ein unerwünschtes vorzeitiges Polymerisieren des Reaktivharzes während der Lagerung zu vermeiden (in dieser Funktion oftmals auch als Stabilisator bezeichnet) und/oder den Start der Polymerisationsreaktion unmittelbar nach der Zugabe des Härtungsmittels zu verzögern; welche Aufgabe der Inhibitor hat, hängt davon ab, in welchen Mengen er eingesetzt wird;
- *"Reaktivverdünner"* flüssige oder niedrigviskose Monomere und Oligomere, welche das Reaktivharz verdünnen und dadurch die zu deren Applikation notwendige Viskosität verleihen, eine oder mehrere zur Reaktion mit dem Reaktivharz befähigte funktionelle Gruppen enthalten und bei der Polymerisation (Härtung) zum überwiegenden Teil Bestandteil der gehärteten Masse (Harzmatrix) werden;
- *"Härtungsmittel"* Stoffe, welche die Polymerisation (das Härten) des Reaktivharzes bewirken;
- *"flüssiges Peroxid"* eine Verbindung (Härtungsmittel), welche bei einer Temperatur von +20°C einen flüssigen Aggregatzustand aufweist und eine Peroxygruppe -O-O-enthält, die homolytisch unter geringer Energieaufwendung, z. B. durch Lichteinstrahlung (photolytisch) oder Zuführung von Wärme (thermolytisch) gespaltet werden kann; hierbei werden zwei radikalische Fragmente gebildet, welche eine radikalische Reaktion (z. B. Polymerisation) starten können;
- *"festes Peroxid"* eine Verbindung (Härtungsmittel), welche bei einer Temperatur von +20°C einen festen Aggregatzustand aufweist und eine Peroxygruppe -O-O-enthält, die homolytisch unter geringer Energieaufwendung, z. B. durch Lichteinstrahlung (photolytisch) oder Zuführung von Wärme (thermolytisch) gespaltet werden kann; hierbei werden zwei radikalische Fragmente gebildet, welche eine radikalische Reaktion (z. B. Polymerisation) starten können;
- *"Peroxidlösung"* oder *"gelöstes Peroxid",* dass das Peroxid vollständig in einem oder in mehreren Lösungsmitteln gelöst ist;
- *"Beschleuniger"* oder *"Aktivator"* eine zur Beschleunigung der Polymerisationsreaktion (Härtung) fähige Verbindung, die dazu dient, die Bildung von Radikalen zu beschleunigen;
- *"Füllstoff"* eine organische oder anorganische, insbesondere anorganische Verbindung, die passiv und/oder reaktiv und/oder funktional sein kann; "passiv" bedeutet dabei, dass die Verbindung unverändert von der härtenden Harzmatrix umschlossen wird; "reaktiv" bedeutet dabei, dass die Verbindung in die Harzmatrix einpolymerisiert und ein erweitertes Netzwerk mit dem Reaktivharz bildet; "funktional" bedeutet dabei, dass die Verbindung nicht in die Harzmatrix einpolymerisiert aber eine bestimmte Funktion in der Formulierung erfüllt, wobei in diesem Fall auch von *"Additiven"* gesprochen wird;
- *"Harzzusammensetzung"* eine Mischung aus dem Reaktivharz und anorganischen und/oder organischen Additiven und Füllstoffen, wie etwa einem Inhibitor und/oder einem Beschleuniger;
- *"Härterzusammensetzung"* eine Mischung aus dem Härtungsmittel und anorganischen und/oder organischen Füllstoffen, wie etwa ein Phlegmatisierungsmittel, d.h. Stabilisierungsmittel für das Härtungsmittel;
- *"zweikomponentiges Reaktivharzsystem"* ein Reaktivharzsystem, das zwei voneinander getrennt gelagerte Komponenten, im Allgemeinen eine Harzkomponente, enthaltend die Harzzusammensetzung, und eine Härterkomponente, enthaltend die Härterzusammensetzung, umfasst, so dass eine Härtung des Reaktivharzes erst nach dem Mischen der beiden Komponenten erfolgt;
- *"mehrkomponentiges Reaktivharzsystem"* ein Reaktivharzsystem, das mehrere voneinander getrennt gelagerte Komponenten umfasst, so dass eine Härtung des Reaktivharzes erst nach dem Mischen aller Komponenten erfolgt;
- *"(Meth)acryl...*/*...(meth)acryl...",* dass sowohl die "Methacryl.../... methacryl... "- als auch die "Acryl.../...acryl..."-Verbindungen umfasst sein sollen; bevorzugt sind in der vorliegenden Erfindung "Methacryl.../...methacryl..." -Verbindungen;
- *"ein", "eine", "einer"* als Artikel vor einer chemischen Verbindungsklasse, z.B. vor dem Wort "Reaktivverdünner", dass eine oder mehrere unter diese chemische Verbindungsklasse fallende Verbindungen, z.B. verschiedene *"Reaktivverdünner",* gemeint sein können;
- *"mindestens ein", "mindestens eine", "mindestens einer"* zahlenmäßig *"ein oder mehrere*"; in einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus"*;
- "*etwa"* vor einem Zahlenwert einen Bereich von ± 5% dieses Wertes, bevorzugt ± 2% dieses Wertes, besonders bevorzugt ± 0% dieses Wertes (also genau diesen Wert).
- ein durch Zahlen begrenzter Bereich, dass die beiden Eckwerte und jeder Wert innerhalb dieses Bereichs einzeln offenbart sind.

Ein erster Gegenstand der Erfindung ist eine Härterzusammensetzung für ein Reaktivharzsystem zur chemischen Befestigung auf Basis einer radikalisch härtbaren ungesättigten Verbindung umfassend
- ein Härtungsmittel für die radikalisch härtbare ungesättigte Verbindung,
- eine Verbindung, die aus der Gruppe bestehend aus Thiolen, Thioharnstoffen und bifunktionellen, primären aliphatischen Aminen ausgewählt ist, und
- ein Metall, in elementarer Form oder in Form einer Metallverbindung,
die dadurch gekennzeichnet ist, dass das Härtungsmittel ein Peroxid ist, welches entweder flüssig ist oder in einem organischen Lösungsmittel gelöst vorliegt.

### Härtungsmittel für radikalisch härtbare ungesättigte Verbindungen

Die Härterzusammensetzung für Harzzusammensetzungen auf der Basis von radikalisch härtbaren Verbindungen enthält ein Peroxid als Härtungsmittel für die radikalisch härtbare ungesättigte Verbindung. Erfindungsgemäß ist das Peroxid flüssig oder, alternativ, in einem geeigneten Lösungsmittel, ausgenommen Wasser, gelöst. Aber auch flüssige Peroxide können in Lösungsmitteln oder Wasser gelöst vorliegen.

Erfindungsgemäß ist die Härterzusammensetzung frei von festen Peroxiden und Suspensionen von Peroxiden in Wasser oder anderen Lösungsmitteln.

Die Erfinder haben herausgefunden, dass der positive Effekt auf die Hafteigenschaften bei Peroxidsuspensionen nicht beobachtet wird.

Alle dem Fachmann bekannten Peroxide, die zum Härten von Methacrylatharzen verwendet werden können, können eingesetzt werden, sofern diese entweder von sich aus flüssig sind oder in einem organischen Lösungsmittel oder Wasser gelöst sind, so dass der Aggregatzustand, in dem die Peroxide eingesetzt werden, flüssig ist. Derartige Peroxide umfassen organische und anorganische Peroxide, entweder flüssig oder fest. Beispiele geeigneter, organischer Peroxide sind ausgewählt unter Dialkylperoxiden (der Formel -OO-), Diacylperoxiden (der Formel -C(O)OOC(O)-), Peroxyestern (der Formel - C(O)OO-), Peroxycarbonaten (der Formel -OC(O)OO-), Peroxydicarbonaten (der Formel -O(O)C-OO-C(O)O-), Peroxyketalen (der Formel -OO-CR₂-OO-), Hydroperoxiden (der Formel -OOH) und cyclischen Peroxiden. Diese können als Oligomer oder Polymer vorliegen.

Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen.

Insbesondere sind die Peroxide aus der Gruppe bestehend aus Di-*iso*-butyrylperoxid, 2,5-Dimethyl-2,5-di(2-ethylhexanoylperoxy)hexan, 2,2-Di-(tert-butylperoxy)butan, 2,5-Dimethyl-2,5-di-tert-butylperoxy)hexan, *tert*-Butylcumylperoxid, 2,5-Dimethyl-2,5-di(tert-butylperoxy)hexyn-3, Di(3,5,5-trimethylhexanoyl)peroxid, Di-tert-butylperoxid, Di-tert-amylperoxid, Cumolperoxyneodecanoat, Cumolperoxyneoheptanoat, 1,1,3,3-Tetramethylbutylperoxyneodecanoat, Di-*iso*-propylperoxydecanoat, *tert-*Amylperoxyneodecanoat, tert-Amylperoxybenzoat, tert-Butylperoxyneodecanoat, 1,1,3,3-Tetramethylbutylperoxy-2-ethylhexanoat, *tert*-Amylperoxy-2-ethylhexanoat, *tert-*Butylperoxy-2-ethylhexanoat, *tert*-Butylperoxyneoheptanoat, *tert*-Butylperoxy-3,5,5-trimethylhexanoat, *tert*-Butylperoxyacetat, *tert*-Butylperoxydiethylacetat, *tert-*Amylperoxyacetat, *tert*-Butylperoxyisobutyrat, Butyl-4,4-di(*tert*-butylperoxy)valerat, *tert-*Butylperoxybenzoat, 1,1,3,3-Tetramethylbutylperoxypivalat, *tert*-Amylperoxypivalat, *tert-*Butylperoxypivalat, *tert*-Butylperoxy-iso-propylcarbonat, *tert*-Butylperoxy-2-ethylhexylcarbonat, *tert*-Amylperoxy-2-ethylhexylcarbonat, Di-butylperoxydicarbonat wie Di-n-butylperoxydicarbonat und Di-sec-buylperoxydicarbonat, Di-(2-ethylhexyl)peroxydicarbonat, Di-n-propylperoxydicarbonat, 1,1-Di-(tert-butylperoxy)cyclohexan, 1,1-Di(*tert*-butylperoxy)-3,3,5-trimethylcyclohexan, 1,1-Di(tert-amylperoxy)cyclohexan, *tert*-Butylhydroperoxid, tert-Amylhydroperoxid, p-Menthanhydroperoxid, Cumolhydroperoxid, 1,1,3,3-Tetramethylbutylhydroperoxid, *iso-*Propylcumolhydroperoxid Di-iso-propylbenzol-mono-hydroperoxid, 3,6,9-Triethyl-3,6,9-trimethyl-1,4,7-triperoxonan und 3,3,5,7,7-Pentamethyl-1,2,4-trioxepan ausgewählt.

Die in den Beispielen verwendeten flüssigen Peroxide und Peroxidlösungen sind besonders bevorzugt.

Neben dem Peroxid und gegebenenfalls dem Lösungsmittel kann die Härterzusammensetzung noch ein Phlegmatisierungsmittel enthalten, um das Peroxid zu stabilisieren. Entsprechende Phlegmatisierungsmittel sind aus der DE 3226602 A1, EP 0432087 A1 und EP 1 371 671 A1 bekannt. Bevorzugt erfüllt das Lösungsmittel auch die Funktion des Phlegmatisierungsmittels.

Das Peroxid kann in einer Menge von 2 bis 50 Gew.-%, bevorzugt 5 bis 45 Gew.-%, besonders bevorzugt 10 bis 40 Gew.-%, bezogen auf die Härterzusammensetzung, in den Reaktivharzsystem enthalten sein.

### Beschleuniger und Co-Beschleuniger

Um die Reaktivität des Peroxids insbesondere unter Baustellenbedingungen zu verbessern, enthält die erfindungsgemäße Härterzusammensetzung ferner eine Verbindung, die aus der Gruppe bestehend aus Thiolen, Thioharnstoffen und bifunktionellen, primären aliphatischen Aminen ausgewählt ist, als Beschleuniger oder Aktivator und ein Metall oder eine Metallverbindung als Co-Beschleuniger oder Co-Aktivator.

Bevorzugt ist das Metall ein Übergangsmetall, vorzugsweise ein redox-aktives Übergangsmetall. Vorzugsweise ist das Metall ausgewählt ist aus der Liste umfassend Titan (Ti), Chrom (Cr), Mangan (Mn), Eisen (Fe), Cobalt (Co), Nickel (Ni), Vanadium (V) und Kupfer (Cu). Besonders bevorzugt ist das Metall ausgewählt ist aus der Liste umfassend Mangan (Mn), Eisen (Fe) und Kupfer (Cu).

In einer zweiten bevorzugten Ausführungsform umfasst die Metallverbindung das Metall und wenigstens einen Liganden, wobei die Metallverbindung ein Komplex aus dem Metall und dem wenigstens einen Liganden darstellt.

Der Ligand kann ein anorganischer oder ein organischer Ligand sein. Bevorzugt ist der Ligand ein organischer Ligand.

Die Metall/Ligand-Komplexe, die in dem Härtungsmittel für radikalisch härtbare ungesättigte Verbindungen gemäß der vorliegenden Erfindung umfasst sind, sind dem Fachmann wohlbekannt.

Sie sind entweder im Handel erhältlich oder lassen sich leicht aus bekannten Verbindungen herstellen und sind nach Verfahren erhältlich, die in der wissenschaftlichen Literatur, der Patentliteratur, in Chemical Abstracts oder im Internet bekannt sind.

Beispielsweise können die oben definierten Komplexe auf Kupferbasis hergestellt werden, indem mindestens ein Ligand mit metallischem Kupfer oder einem Kupferderivat (Kupfer(0), Kupfer(I), Kupfer(lI) oder Kupfer(III)), beispielsweise einem Kupferhalogenid, wie Kupfer- oder Kupfer(II)-jodid, -bromid oder -chlorid, oder anderen Derivaten.

Die Bildung des Komplexes erfolgt im Allgemeinen unter einer inerten Atmosphäre, beispielsweise unter Stickstoff oder Argon, in einem organischen Lösungsmittelmedium, vorzugsweise einem aprotischen polaren Lösungsmittel, beispielsweise Acetonitril oder DMF. Diese Komplexierungsreaktion wird normalerweise bei einer Temperatur zwischen 0 °C und 80 °C durchgeführt, abhängig von der Art der vorhandenen Verbindungen. Im Allgemeinen ist die Reaktionstemperatur Raumtemperatur.

Der Komplex wird im Allgemeinen in Form eines Niederschlags erhalten, der aus dem Reaktionsmedium nach an sich bekannten Techniken isoliert wird, beispielsweise durch Filtration und möglicherweise Umkristallisation in einem Lösungsmittel, das vorteilhafterweise mit dem für die Komplexierungsreaktion verwendeten identisch ist.

In einer bevorzugten Ausführungsform wird der Ligand aus der Klasse der β-Diketonen ausgewählt. Bevorzugte β-Diketon-Liganden sind ausgewählt aus der Gruppe bestehende aus Pentan-2,4-dion (Acetylacetonat), 1,5-Diphenylpentan-2,4-dion, 3-Methylpentan-2,4-dion, 1-(N,N-Dimethyl)aminobutan-1,3-dion, 2-Acetylcyclohexanon, 2,2,6,6-Tetramethylheptan-3,5-dion und 1-Ethoxybutan-1,3-dion, wobei diese Liste keine Einschränkung darstellt.

In einer besonders bevorzugten Ausführungsform ist der organische Ligand Acetylacetonat (acac). Besonders bevorzugt sind Kupfer-(II)-Acetylacetonat, Eisen-(III)-Acetylacetonat, und Mangan-(II)-Acetylacetonat.

Das Metall oder die Metallverbindung kann in einer Menge von 0,01 bis 1,5 Gew.-%, bevorzugt 0,05 bis 1,0 Gew.-%, besonders bevorzugt 0,1 bis 0,8 Gew.-%, bezogen auf die Härterkomponente, in der Härterkomponente enthalten sein.

### Additive und Füllstoffe

Darüber hinaus kann die Härterkomponente zusätzlich weitere Additive, namentlich Emulgatoren, Frostschutzmittel, Puffer und/oder Rheologieadditive, und/oder Füllstoffe enthalten.

Insbesondere können Emulgatoren, Frostschutzmittel, Puffer und Rheologieadditive in nicht veröffentlicher Art und Menge neben Wasser und dem Peroxid in kommerziellen Peroxid-Dispersionen enthalten sein.

Emulgatoren können sein: ionische, nichtionische oder amphotere Tenside; Seifen, Netzmittel, Detergenzien; Polyalkylenglycolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglycolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglycolether, Alkylphenolcarboxylate; quartäre Ammoniumverbindungen, Esterquats, Carboxylate quartärer Ammoniumverbindungen.

Frostschutzmittel können sein: organische oder anorganische, wasserlösliche Zusätze, die die Einfriertemperatur des Wassers herabsetzen; Mono-, bi- oder höherfunktionelle Alkohole, wie Ethanol, n- oder iso-Propanol, n-, iso- oder tert.-Butanol usw.; Ethylenglycol, 1,2- oder 1,3-Propylenglycol, Glycerol, Trimethylolpropan usw. Oligo-oder Polyglycole, wie Dialkylenglycole, Trialkylenglycole usw.; Zucker, insbesondere Mono- oder Disaccharide; Triosen, Tetrosen, Pentosen und Hexosen in ihrer Aldehyl-oder Ketoform sowie der analogen Zuckeralkohole. Beispiele, aber nicht einschränkend, sind Glycerinaldehyd, Fructose, Glucose, Saccharose, Mannitol.

Puffer können sein: organische oder anorganische Säure/Base-Paare, die den pH-Wert der Härterkomponente stabilisieren, wie Essigsäure/Alkaliacetat, Zitronensäure/Monoalkalicitrat, Monoalkali-/Dialkalicitrat, Dialkali-/Trialkalicitrat, Kombinationen von mono-, di- und/oder tri-basichen Alkaliphosphaten ggf. mit Phosphorsäure; Ammoniak mit Ammoniumsalzen; Kohlensäure-Bicarbonat-Puffer usw. Verwendet werden können auch intramolekulare, sogenannte Good-Puffer, wie 4-(2-Hydroxyethyl)-1-piperazinethanesulfonsäure (HEPES) oder 2-(N-Morpholino)ethansulfonsäure (MES) sowie Tris(hydroxymethyl)-aminomethan (TRIS).

Die Einstellung der Fließeigenschaften der Härterzusammensetzung erfolgt über den Zusatz von verdickenden Substanzen, auch Rheologieadditive genannt. Geeignete Rheologieadditive sind: Schichtsilikate wie Laponite, Bentone oder Montmorillonit, Neuburger Kieselerde, pyrogene Kieselsäuren, Polysaccharide; Polyacrylat-, Polyurethan- oder Polyharnstoffverdicker sowie Celluloseester. Zur Optimierung der Fließeigenschaften der Härterkomponente können weiterhin Netz- und Dispergiermittel, Oberflächenadditive, Entschäumer & Entlüfter, Wachsadditive, Haftvermittler, Viskositätsreduzierer oder Prozessadditive zugesetzt werden.

Neben den Rheologiemitteln kann die erfindungsgemäße Härterzusammensetzung Füllstoffe enthalten.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe). Diese haben vorzugsweise einen maximalen Durchmesser von 1 bis 2 mm. Bevorzugt und deutlicher verstärkend wirken sich jedoch die globulären, inerten Stoffe (Kugelform) aus.

Die Füllstoffe liegen in der Härterzusammensetzung vorzugsweise in einer Menge von bis zu 85, insbesondere 40 bis 85, vor allem 50 bis 80 Gew.-% vor.

Die Summe der nicht bereits in den kommerziellen Produkten, den Peroxidformulierungen, enthaltenen Zusatzstoffe, wie Rheologieadditive, Emulgatoren, Frostschutzmittel und dergleichen, kann bei 0 bis 30 Gew.-%, bevorzugt 0 bis 25 Gew.-%, besonders bevorzugt bei 0 bis 20 Gew.-%, jeweils bezogen auf die Härterzusammensetzung, liegen.

Die erfindungsgemäße Härterzusammensetzung kann vorteilhaft in einem mehrkomponentigen Reaktivharzsystem, was auch zweikomponentige Reaktivharzsysteme miteinschließt, als Härterkomponente verwendet werden.

Ein weiterer Gegenstand der Erfindung ist demnach ein mehrkomponentiges Reaktivharzsystem, umfassend eine Harzkomponente und die oben beschriebene Härterzusammensetzung als Härterkomponente. Die Harzkomponente enthält mindestens eine radikalisch härtbare ungesättigte Verbindung. Die radikalisch härtbare ungesättigte Verbindung kann ein Reaktivharz sein. Alternativ kann die eine radikalisch härtbare ungesättigte Verbindung ein Reaktivverdünner sein. Gemäß einer weiteren Alternative der Erfindung kann die radikalisch härtbare ungesättigte Verbindung auch eine Mischung aus mindestens einem Reaktivharz und mindestens einem Reaktivverdünner, eine Reaktivharzmischung, umfassen.

Mit der erfindungsgemäßen Härterzusammensetzung können die Haftungseigenschaften eines ausgehärteten Reaktivharzsystems auf Basis einer radikalisch härtbaren ungesättigten Verbindung sowohl auf trockenen als auch auf feuchten mineralischen Untergründen verbessert werden, verglichen mit Härterzusammensetzungen auf der Basis von in Wasser oder Lösungsmitteln dispergierten festen Peroxiden. Ganz besonders lässt sich dieser Effekt bei feuchten Untergründen beobachten.

Daher ist ein weiterer Gegenstand der Erfindung die Verwendung einer oben beschriebenen Härterzusammensetzung zur Verbesserung der Haftung eines ausgehärteten Reaktivharzsystems auf Basis einer radikalisch härtbaren ungesättigten Verbindung auf mineralischen Oberflächen, insbesondere feuchten mineralischen Oberflächen.

### Mehrkomponentiges Reaktivharzsystem

Das beanspruchte Reaktivharzsystem liegt bevorzugt als ein mehrkomponentiges Reaktivharzsystem, wobei hiervon auch ein zweikomponentiges Reaktivharzsystem umfasst ist, vor. Unter einem mehrkomponentigen System ist insbesondere ein zweikomponentiges System zu verstehen, worin die miteinander reaktionsfähigen Bestandteile so beinhaltet sind, dass sie während der Lagerung nicht zu unerwünschten Reaktionen führen können. Bei einem zweikomponentigen System bedeutet dies beispielsweise, dass das System eine Zweikammervorrichtung ist, die Komponenten (Reaktivharzkomponente und Härterkomponente) also in räumlich voneinander getrennten Kammern vorliegen.

Ein weiterer Gegenstand der Erfindung ist somit ein mehrkomponentiges Reaktivharzsystem, welches die erfindungsgemäße Härterzusammensetzung, wobei die Bestandteile des Reaktivharzsystems derart auf die Komponenten aufgeteilt sind, dass sie nicht miteinander reagieren. Erst wenn die Komponenten gemischt werden, reagieren die Bestandteile, so dass das Reaktivharz aushärtet. Das bedeutet, dass die Bestandteile des erfindungsgemäßen Härtersystems auf unterschiedliche Komponenten aufgeteilt sind.

Das bevorzugte zweikomponentige Reaktivharzsystem besteht aus einer Reaktivharzkomponente und einer Härterkomponente. Es ist auch möglich, das Reaktivharzsystem auf drei oder mehr Komponenten aufzuteilen. In diesem Fall ergibt sich ein mehrkomponentiges Reaktivharzsystem.

Die Reaktivharzkomponente umfasst dabei ein Reaktivharz, einen Reaktivverdünner, gegebenenfalls einen Inhibitor und gegebenenfalls einen Beschleuniger. Es können jeweils ein oder mehrere der Bestandteile enthalten sein. Ferner kann die Reaktivharzkomponente anorganische und/oder organische Additive sowie Füllstoffe umfassen.

Daher umfasst die Reaktivharzkomponente in einer bevorzugten Ausführungsform ein Reaktivharz, mindestens einen Reaktivverdünner, einen Inhibitor, gegebenenfalls einen Beschleuniger und anorganische und/oder organische Additive sowie Füllstoffe.

### Radikalisch härtbare ungesättigte Verbindung

Als radikalisch polymerisierbare Verbindungen, dem Reaktivharz, sind Verbindungen auf Urethan(meth)acrylatbasis, Verbindungen auf Epoxy(meth)acrylatbasis, Methacrylate von alkoxylierten Bisphenolen, Verbindungen auf Basis weiterer ethylenisch ungesättigter Verbindungen und Kombinationen davon geeignet, wie sie dem Fachmann bekannt sind.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in der DE 102011017 626 B4 beschriebenen Urethanmethacrylatharze (die auch als Vinylesterurethanharze bezeichnet werden).

Als Isocyanate können aliphatische (cyclische oder lineare) und/oder aromatische di-oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di-oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykol-mono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat. Besonders bevorzugt sind dabei die entsprechenden Methacrylate, da die sterische Hinderung gegenüber Acrylaten zu besserer Alkalistabilität führt.

Geeignet sind auch Verbindungen, die zumindest teilweise auf einer recyclierten Verbindung, inbesondere von (Meth)acrylsäureestern, basieren. Besonders bevorzugt ist ein (Meth)acrylsäureester, der aus recycliertem Methyl(meth)acrylat erhalten wird. Geeinget sind Verbindungen, wie hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykol-mono(meth)acrylat, bevorzugt Acryl- bzw. Methacrylsäurehydroxyalkylester, wie Hydroxyethyl(meth)acrylat, Hydroxypropyl(meth)acrylat, Polyoxyethylen(meth)acrylat und Polyoxypropylen(meth)acrylat, die jeweils aus recycliertem Methyl(meth)acrylat erhalten werden können.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylesterharz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

Die Epoxy(meth)acrylatharze werden durch Umsetzung einer Epoxidgruppen aufweisenden organischen Verbindung mit Acrylsäure oder Methacrylsäure erhalten, so dass die Harze notwendigerweise Acryloxygruppen oder Methacryloxygruppen an den Molekülenden und Hydroxylgruppen in 2-Position zur gebildeten Acryloxy- bzw. Methacryloxygruppe (im Folgenden auch α-Hydroxylgruppen genannt) in der Hauptkette des Moleküls aufweisen. Zweckmäßig werden pro Epoxidäquivalent 0,7 bis 1,2 Carboxyläquivalente (Meth)acrylsäure eingesetzt. Die Epoxidgruppen aufweisenden organischen Verbindungen und die (Meth)acrylsäure werden dabei bevorzugt in etwa stöchiometrischen Verhältnissen eingesetzt, d.h. pro Epoxidäquivalent der organischen Verbindung wird etwa ein Äquivalent (Meth)acrylsäure eingesetzt. Die Umsetzung erfolgt in Gegenwart geeigneter, dem Fachmann hierfür bekannter Katalysatoren, wie quartären Ammoniumsalzen.

Zweckmäßig werden als Epoxidgruppen aufweisende organische Verbindungen solche mit einem Molekulargewicht eingesetzt, das einem Zahlenmittel der Molmasse *M̅ₙ* im Bereich von 129 bis 2.400 g/Mol entspricht und die im Mittel mindestens eine, bevorzugt 1,5 bis 2 Epoxidgruppen pro Molekül enthalten. Besonders bevorzugt sind die Epoxidgruppen vom Glycidylether- oder Glycidylestertyp, die durch Umsetzen eines Epihalohydrins, insbesondere Epichlorhydrin, mit einer mono- oder multifunktionellen aliphatischen oder aromatischen Hydroxyverbindungen, Thiolverbindungen oder Carbonsäuren oder einem Gemisch davon erhalten werden. Die erhaltene Epoxidgruppen aufweisende organische Verbindung weist eine Epoxidäquivalentmasse (EEW) bevorzugt im Bereich von 87 bis 1.600 g/Val, stärker bevorzugt im Bereich von 160 bis 800 g/Val und am stärksten bevorzugt im Bereich von 300 bis 600 g/Val auf.

Beispiele geeigneter Epoxidgruppen aufweisender Verbindungen sind Polyglycidylether mehrwertiger Phenole wie beispielsweise Brenzkatechin, Resorcin, Hydrochinon, 4,4`-Dihydroxydiphenylmethan, 2,2-(4,4`-Dihydroxydiphenyl)propan (Bisphenol-A), Bis(4-hydroxyphenyl)methan (Bisphenol F), 4,4`-Dihydroxydiphenylsulfon (Bisphenol S), 4,4`-Dihydroxydiphenylcyclohexan, Tris-(4-hydroxyphenyl)-methan, Novolaken (d.h. aus Umsetzungsprodukten von ein- oder mehrwertigen Phenolen mit Aldehyden, insbesondere Formaldehyd, in Gegenwart saurer Katalysatoren), wie Phenol-Novolak-Harz, Cresol-Novolak-Harz.

Weiter können folgende beispielhaft, jedoch nicht einschränkend, genannt werden: Glycidylether von Monoalkoholen, wie beispielsweise n-Butanol oder 2-Ethylhexanol; oder Glycidylether mehrwertiger Alkohole, wie beispielsweise aus 1,3-Butandiol, 1,4-Butandiol, 1,6-Hexandiol, Glycerin, Benzylalkohol, Neopentylglykol, Ethylenglykol, Cyclohexandimethanol, Trimethylolpropan, Pentaerythrit und Polyethylenglykolen, Triglycidylisocyanurat; Polyglycidylthioether mehrwertiger Thiole, wie Bismercaptomethylbenzol; oder Glycidylester von Monocarbonsäuren, wie Versaticsäure; oder Glycidylester mehrwertiger, aromatischer und aliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Als Epoxidgruppen aufweisende organische Verbindungen sind Diglycidylether zweiwertiger Hydroxyverbindungen der allgemeinen Formel (I) besonders bevorzugt 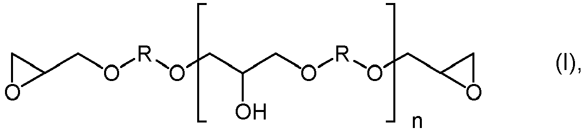 in der R eine unsubstituierte oder substituierte aliphatische oder aromatische Gruppe, bevorzugt eine aromatische Gruppe, stärker bevorzugt eine aromatische Gruppe mit 6 bis 24 Kohlenstoffatomen ist und der Mittelwert für n gleich 0 bis 3 ist. R ist besonders bevorzugt eine Gruppe vom Bisphenoltyp, wie Bisphenol A, Bisphenol F oder Bisphenol S, oder vom Novolaktyp, wobei eine Gruppe vom Bisphenoltyp ganz besonders bevorzugt ist. Der Mittelwert für n ist bevorzugt etwa 0,1, etwa 1 oder etwa 2. Dabei werden im Sinne der vorliegenden Erfindung Verbindungen, in denen n - 0,1 ist, als monomer und Verbindungen, in denen n ~ 1 oder 2 ist, als polymer bezeichnet.

Die polymeren Verbindungen haben gegenüber den monomeren Verbindungen den Vorteil, dass der Reaktivharzgehalt in der Reaktivharzzusammensetzung deutlich reduziert werden kann, was die Reaktivharzzusammensetzung wirtschaftlicher in der Herstellung macht, da hierdurch die Herstellungskosten reduziert werden können.

Im Sinne der Erfindung sind Vinylesterharze Oligomere oder Polymere mit mindestens einer (Meth)acrylat-Endgruppe, so genannte (Meth)acrylat-funktionalisierte Harze, wozu vor allem Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser polymerisierbaren Bestandteile.

Beispiele für derartige Epoxy(meth)acrylate sind solche der Formel (II) 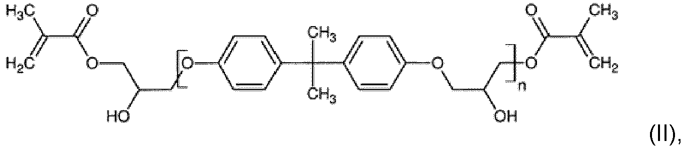 worin n für eine Zahl grösser oder gleich 1 steht (wenn Gemische verschiedener Moleküle mit unterschiedlichen n-Werten vorliegen und durch die Formel (II) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (III) 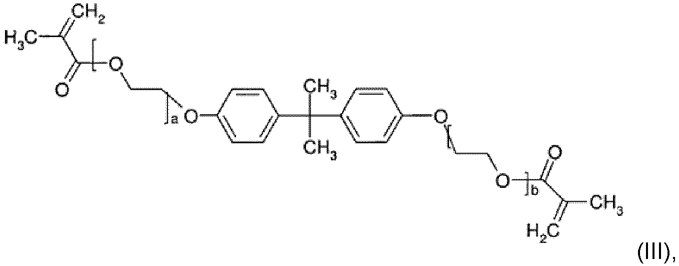 worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (III) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2312559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß bevorzugt verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktivharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

### Reaktivverdünner

In einer Ausführungsform enthält die Harzkomponente des Reaktivharzsystems zusätzlich zu dem Reaktivharz mindestens eine weitere niederviskose, radikalisch polymerisierbare ungesättigte Verbindung als Reaktivverdünner. Diese wird zweckmäßig zu dem Reaktivharz gegeben und ist daher in der Harzkomponente enthalten.

Das Reaktivharzsystem kann geeignete Reaktivverdünner enthalten, wie sie in den Anmeldungen EP 1 935 860 A1 und DE 195 31 649 A1 beschrieben sind. Vorzugsweise enthält die Reaktivharzzusammensetzung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat (HP(M)A), 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, *N,N*-Dimethylaminoethyl(meth)acrylat, /V,/V-Dimethylaminomethyl(meth)acrylat, Acetoacetoxyethyl(meth)acrylat, Isobornyl(meth)acrylat, 2-Ethylhexyl(meth)acrylat, Methoxypolyethylenglykol-mono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, und Decalyl-2-(meth)acrylat; Glycerolformal(meth)acrylat; Solketal(meth)acrylat, Cyclohexyl(meth)acrylat, Phenoxyethyldi(meth)acrylat, Methoxyethyl(meth)acrylat, *tert-*Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200- oder PEG400-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie tert-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Grundsätzlich können auch andere übliche radikalisch polymerisierbaren Verbindungen, allein oder im Gemisch mit den im vorhergehenden Absatz beschriebenen (Meth)acrylsäureestern, eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Der Reaktivverdünner kann allein oder als Mischung aus zwei oder mehreren Reaktivverdünnern eingesetzt werden.

Besonders bevorzugte Reaktivverdünner sind die in den Beispielen verwendeten Reaktivverdünner.

Die radikalisch härtbare ungesättigte Verbindung kann in einer Menge von 10 bis 99,99 Gew.-%, bevorzugt 15 bis 97 Gew.-%, besonders bevorzugt 30 bis 95 Gew.-%, bezogen auf die Harzkomponente, in dem Reaktivharzsystem enthalten sein. Hierbei kann die radikalisch hätbare Verbindung entweder ein Reaktivharz auf Basis eine radikalisch härtbaren Verbindung oder ein Reaktivverdünner oder eine Mischung eines Reaktivharzes mit ein, zwei oder mehreren Reaktivverdünnern sein.

Für den Fall, dass die radikalisch härtbare ungesättigte Verbindung eine Reaktivharzmischung ist, so entspricht die Menge der Mischung, die in dem Reaktivharzsystem enthalten sein kann, der Menge der radikalisch härtbaren Verbindung, nämlich von 10 bis 99,99 Gew.-%, bevorzugt 15 bis 97 Gew.-%, besonders bevorzugt 30 bis 95 Gew.-%, bezogen auf die Harzkomponente, wobei, bezogen auf die Reaktivharzmischung, der Anteil des Reaktivharzes 0 bis 100 Gew.-%, bevorzugt 30 bis 70 Gew.-% und der Anteil des Reaktivverdünners oder einer Mischung aus mehreren Reaktivverdünnern 0 bis 100 Gew.-%, bevorzugt 30 bis 70 Gew.-% beträgt.

### Inhibitoren

Sowohl zur Stabilisierung des Reaktivharzes oder der das Reaktivharz enthaltenden Reaktivharzzusammensetzung als auch zur Einstellung der Harzreaktivität können im erfindungsgemäßen Reaktivharzsystem ein oder mehrere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter nicht-phenolischen Inhibitoren, insbesondere Phenothiazinen, ausgewählt.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-Oxyl-Radikale, insbesondere vom Piperidinyl-*N-*oxyl- oder Tetrahydropyrrol-*N*-oxyl-Typ, in Betracht, wie Aluminium-*N-*nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, 4-Hydroxy-TEMPO, (TEMPOL), 4-Acetyl-TEMPO, TEMPO und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Als stabile N-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitoren ausgewählt aus der Gruppe bestehend aus *N-*Oxyl-Radikalen, Catecholen, Catecholderivaten und Phenothiazinen und ein Gemisch von zwei oder mehreren davon. Besonders bevorzugt sind der oder die Inhibitoren ausgewählt aus der Gruppe bestehend aus Tempol, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder allein oder als Kombination von zweien oder mehreren davon verwendet werden. Die Kombination von phenolischen und nicht-phenolischen Inhibitoren ist bevorzugt. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktivharz-Zusammensetzung zeigt.

Besonders bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt *tert*-Butyl-Brenzkatechin und Brenzkatechin durch die funktionelle Gruppe werden die gewünschten Eigenschaften erreicht (im Vergleich zu den sonst verwendeten Reaktivverdünnern), BHT und Phenothiazin.

Der Inhibitor oder die Inhibitormischung kann in einer Menge von 0,001 bis 5 Gew.-%, bevorzugt 0,01 bis 3 Gew.-%, besonders bevorzugt 0,05 bis 1 Gew.-%, bezogen auf die Harzkomponente, in den Reaktivharzsystem enthalten sein. Sind mehrere Inhibitoren enthalten, so entspricht die eben genannte Menge der Gesamtmenge an Inhibitoren.

### Füllstoffe und Additive

Zur Formulierung der erfindungsgemäßen Reaktivharzkomponente können übliche Füllstoffe verwendet werden, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon.

Besonders bevorzugt ist die Verwendung mindestens eines pulverisierten Recyclingmaterials gemäß der EP 4 177 235 A1, oder von bestimmten Kalziumoxidtypen gemäß der EP 4 261 196 A1 oder von Ziegelmehl gemäß der EP 4 177 229 A1 als Füllstoff.

Füllstoffe liegen in der Harzkomponente vorzugsweise in einer Menge von 20 bis zu 90, insbesondere 40 bis 80, vor allem 50 bis 80 Gew.-% vorhanden.

Weitere denkbare Zusätze sind ferner Rheologieadditive, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE102010008971A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktivharzmörtel, Härter), beispielsweise von 1 bis 20 Gew.-%, vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser, oder Glykole. Darüber hinaus können auch Mittel zur Verbesserung der Verträglichkeit zwischen Harz-und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure, z.B. mit Polydimethylsiloxan (PDMS) nachbehandelte pyrogene Kieselsäure, insbesondere bevorzugt die in den Beispielen verwendete apolar nachbehandelte pyrogene Kieselsäure.

In dieser Hinsicht wird Bezug genommen auf die Anmeldungen WO 02/079341 und WO 02/079293 sowie WO 2011/128061 A1.

In einer Ausführungsform kann die Reaktivharzkomponente zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler ist zweckmäßig in Mengen von etwa 1 bis etwa 10 Gew.-% bezogen auf das Gesamtgewicht der Reaktivharzkomponente enthalten.

Des Weiteren ist es bevorzugt, dass die Reaktivharzkomponente auch ein Thixotropiermittel enthält, vorzugsweise apolar nachbehandelte pyrogene Kieselsäure, besonders bevorzugt mit Polydimethylsiloxan (PDMS) nachbehandelte pyrogene Kieselsäure, ganz besonders bevorzugt apolar nachbehandelte pyrogene Kieselsäure.

Bei einer Ausführungsform der Erfindung enthält die Harzkomponente neben der vorhandenen radikalisch härtbaren Verbindung zusätzlich noch eine hydraulisch abbindende oder polykondensierbare anorganische Verbindung, insbesondere Zement. Derartige Hybridmörtelsysteme sind ausführlich in DE 42 31 161 A1 beschrieben. Dabei enthält die Harzkomponente vorzugsweise als hydraulisch abbindende oder polykondensierbare anorganische Verbindung Zement, beispielsweise Portlandzement oder Aluminatzement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Harzkomponente kann als polykondensierbare anorganische Verbindung auch silikatische, polykondensierbare Verbindungen, insbesondere lösliches, gelöstes und/oder amorphes Siliziumdioxid enthaltende Stoffe wie z.B. pyrogene Kieselsäure umfassen.

Die hydraulisch abbindende oder polykondensierbare Verbindung kann in einer Menge von 0 bis 40 Gew.-%, bevorzugt 5 bis 30 Gew.-%, besonders bevorzugt 10 bis 30 Gew.-%, bezogen auf die Harzkomponente, in dem Reaktivharzsystem enthalten sein. Sind hydraulisch abbindende oder polykondensierbare Verbindungen in dem Reaktionssystem enthalten, so liegt die Gesamtmenge an Füllstoffen im oben genannten bereich. Dementsprechend beträgt die Gesamtmenge an Füllstoffen, einschließlich der hydraulisch abbindenden und polykondensierbaren Verbindungen 20 bis zu 90, insbesondere 40 bis 80, vor allem 50 bis 80 Gew.-%, bezogen auf die Harzkomponente.

Das Mischungsverhältnis von Reaktivharz- und Härterkomponente liegt im Bereich von 1:1 bis 20:1 bezogen auf das Volumen der Komponenten. Bevorzugt handelt es sich um Mischungsverhältnisse zwischen 3:1 und 10:1, besonders bevorzugt sind Mischungsverhältnisse von 5:1 bis 10:1.

Das erfindungsgemäße mehrkomponentige Reaktivharzsystem kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Das erfindungsgemäße Reaktivharzsystem findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Die Erfindung wird im Folgenden anhand einer Reihe von Beispielen näher erläutert. Alle Beispiele stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

### Liste der in den Beispielen und Vergleichsbeispielen verwendeten Bestandteile (Erklärung der Abkürzungen) sowie ihrer Handelsnamen und Bezugsquellen:

- UMA: Urethanmethacrylat/HPMA hergestellt wie beschrieben in Beispiel 1a aus der EP 2 838 949 B1; UMA 121-HPMA / 65-35
- HPMA: Bisomer^{®} HPMA: Hydroxypropylmethacrylat, Fa. GEO Specialty Chemicals, Inc.
- BDDMA: 1,4-Butandioldimethacrylat, Fa. Evonik
- AAEMA: 2-(Acetylacetoxy)ethylmethylacrylat, Fa. Lonza Ltd.
- TEMPOL: 4-Hydroxy-2,2,6,6-tetramethylpiperidinyloxyl, Fa. Evonik Performance Materials GmbH
- MEHQ: 4-Methoxyphenol; Fa. Sigma-Aldrich
- DiPpT: Di-Isopropanol-p-toluidin; Fa. BASF
- tBBK: tert-Butylbrenzkatechin, Fa. Sigma-Aldrich
- Hexandion: 3,4-Hexandion: Fa. Sigma-Aldrich
- Na-acetat: Natriumacetat-Trihydrat
- TIB KAT^{®} 808: Kupfer(II)carboxylat-Lösung, Fa. TIB Chemicals
- AB 122237: Vanadylpentandionat Fa. ABCR
- AB 137287: N-Benzoylthiourea Fa. ABCR
- Dytek^{®} A: Dytek^{®} A Amin 99%: 2-Methylpentamethylendiamin, Fa. INVISTA Nederland B.V.
- Cab-o-Sil^{®} TS720: hydrophobe, pyrogene Kieselsäure; oberflächenbehandelt mit Polydimethylsiloxan (PDMS); Fa. Cabot
- Secar^{®} 80: Calciumaluminatzement, Fa. Imerys
- Quarzsand F32: Quarzsand, Fa. Quarzwerke Frechen
- Durcal 5: Calciumcarbonat, Kreide, Fa. Omya, Inc.
- HDK^{®} H20RH: hydrophobe, pyrogene Kieselsäure; Oberflächenmodifizierung n-Alkyl-Siloxy-Gruppen; BET-Oberfläche nach DIN ISO 9277 170-230 m²/g; Fa. Wacker Chemie AG
- Trigonox^{®} C: *tert*-Butylperoxybenzoat (99%, flüssig), Fa. Nouryon
- Trigonox^{®} K-90: Cumolhydroperoxid, 90% in Cumyl, Fa. Nouryon
- Trigonox^{®} A-W70: *tert*-Butylhydroperoxid (70 % in Wasser), Fa Nouryon
- Trigonox^{®} 44B: Acetylacetonperoxid, 33 % in Diethylenglykol (5-9%), Wasser (7-13%), Wasserstoffperoxid (1-2%) und Diacetonalkohol, FA. Akzo Nobel Functional Chemicals LLC
- BP-35-SAQ: Dibenzoylperoxid, 35% Suspension in Wasser, Fa. United Initiators GmbH

Es wurden Beispielformulierungen und Vergleichsformulierungen wie nachfolgend beschrieben hergestellt und die Haftfestigkeiten der ausgehärteten Massen auf feuchtem und trockenem Beton (C20/50) sowie die innere Festigkeit der ausgehärteten Massen ermittelt.

### Herstellung der Harz- und der Härterzusammensetzungen

Zur Herstellung der Harzzusammensetzung (A-Komponente) der Beispiele 1 bis 9 und des Vergleichsbeispiels V1 wurden jeweils die in Tabelle 1 aufgelisteten Harz, der bzw. die Reaktivverdünner in einer in einer mittleren Speedmixerdose auf dem Magnetrührer homogen vermischt. Dann wurden der Inhibitor und ein Katalysator dazugeben und für mindestens 30 Minuten bis 1 Stunde weitergerührt. Anschließend wurden die Füllstoffe dazugeben und mit einem Spatel von Hand vorgemischt. Die vorgemischte Mischung wird dann in einem Speedmixer vermischt bis homogene Massen erhalten wurden.

Zur Herstellung der Härterzusammensetzung (B-Komponente) wurden jeweils die in der Tabelle 1 aufgelisteten Beschleuniger und das Peroxid bzw. die Peroxidlösung mit einem Magnetrührer gemischt. Dann wurden die Füllstoffe dazugeben und mit einem Spatel von Hand vorgemischt. Die vorgemischte Mischung wird dann im Speedmixer vermischt bis homogene Massen erhalten wurden.

Die beiden Massen wurden im Volumenverhältnis von A:B = 5:1 in Hartkartuschen gefüllt.

Als Vergleichsbeispiele V2 und V3 dienten der kommerziell erhältliche Mörtel Hilti HIT HY200A (V2) und Hilti HIT RE500V3 (V3).

### Messung der Haftfestigkeiten

Als Untergrund wurde diamantgesägter Beton C20/25, jeweils feucht und trocken verwendet. Runde Metallplatten mit einem Ring aus doppelseitigem Klebeband als Abstandshalter werden auf dem zu verklebenden Untergrund befestigt und mit der Mörtelmasse gefüllt. Nach dem Aushärten bei Raumtemperatur (20°C, 1Tag) wird mit einem Haftprüfgerät (DYNA Z, Hersteller proceq) die Haftfestigkeit gemessen.

### Messung der inneren Festigkeit (Scherfestigkeit)

Zur Bestimmung der mit Zweikomponenten-Mörtelmassen erzielten inneren Festigkeit wird der gemischte Mörtel in eine Stahlhülse mit definierter Geometrie und definierter Füllhöhe des Mörtels (Einbindetiefe) eingebracht, Anschließend wird eine Ankerstange mittels einer Zentrierhilfe mittig in der mit Mörtel gefüllten Stahlhülse platziert. Nach Aushärtung des Mörtels bei Raumtemperatur und für mindestens 12 Stunden wird die Probe mit Hilfe eines Gewindeadapters in eine Zugprüfmaschine eingeschraubt (Fabrikat: Zwick Roell Z050, 50 kN). Die Probe wird mit Zugkraft bei definierter Geschwindigkeit bis zum Versagen belastet. Die entsprechende Kraft-Weg-Abhängigkeit wird kontinuierlich registriert. Es werden jeweils fünf Einzelmessungen durchgeführt und der Mittelwert der maximalen Kraft beim Versagen berechnet.

Zur Durchführung der Messungen wurden Ankerstangen mit Gewinde M8 und Stahlhülsen mit folgender Geometrie verwendet:

| | |
|---|---|
| Hinterschnitttiefe: | 0,35+/-0,02 mm |
| Hinterschnittbreite: | 3mm |
| Einbindetiefe: | 36mm |
| Innendurchmesser: | 14 mm |

Die aus diesen Messungen ermittelte Verbundspannung ist definiert als der Quotient aus maximaler Kraft beim Versagen und der Scherfläche der verwendeten Ankerstange (Ankerstange M8: 904,3 mm²).

**Tabelle 1: Zusammensetzung der Beispiel- und Vergleichsbeispielformulierungen**

| **Beispiel** | **1** | **2** | **3** | **4** | **5** | **6** | **7** | **V1** |
|---|---|---|---|---|---|---|---|---|
| | **[Gew.-%]** | | | | | | | |
| | | | | | | | | |
| UMA | 17,47 | 24,27 | 24,27 | 24,27 | 25,19 | 24,53 | 24,53 | 23,49 |
| HPMA | 3,49 | 4,85 | 4,85 | 9,72 | 10,38 | 9,42 | 9,43 | 11,28 |
| BDDMA | 6,99 | | | | | | | |
| AAEMA | 6,62 | 5,83 | 6,21 | | | | | |
| | | | | | | | | |
| TEMPOL | 0,02 | | | | | 0,01 | 0,33 | 0,12 |
| MEHQ | 0,0016 | 0,10 | | | | | | |
| DiPpT | | | | | | | | 0,74 |
| tBBK | | | 0,19 | | | | | |
| | | | | | | | | |
| Hexandion | | | | 1,94 | 1,94 | 1,03 | | |
| Na-acetat | | | | 0,49 | 0,48 | 0,47 | | |
| TIB KAT^{®} 808 | 0,35 | | 0,49 | | 0,48 | | | |
| AB 122237 | | 0,97 | 0,49 | | | | 0,09 | |
| AB 137287 | | 0,97 | 0,49 | | | | 0,47 | |
| Dytek A | 4,21 | | | | | | | |
| | | | | | | | | |
| Cab-o-sil^{®} TS-720 | 2,67 | 2,82 | 2,82 | 2,92 | 2,82 | 2,75 | 2,74 | 2,72 |
| Secar^{®}80 | 18,22 | 13,59 | 13,59 | 14,69 | 12,01 | 14,25 | 14,25 | 13,32 |
| Quarzsand F32 | 33,07 | 43,96 | 43,69 | 43,06 | 43,60 | 41,87 | 42,50 | 42,31 |
| Durcal 5 | 3,67 | | | | | | | |
| HDK H20RH | 1,01 | | | | | | | |
| | | | | | | | | |
| Trigonox^{®} C | 2,22 | 2,91 | 2,91 | | | | | |
| Trigonox^{®} K-90 | | | | 2,91 | | | | |
| Trigonox^{®} A-W70 | | | | | 3,10 | | | |
| Trigonox^{®} 44B | | | | | | 5,66 | 5,66 | |
| BP-35-SAQ | | | | | | | | 6,02 |

**Tabelle 2: Ergebnisse der Abzugsmessung und der Messung der inneren Festigkeit der erfindungsgemäßen Zusammensetzungen 1 bis 9 und der Vergleichszusammensetzungen V1 bis V3**

| **Beispiel** | **Peroxid** | **Beschleuniger** | **Pull-off [MPa]** | | **innere Festigkeiten [MPa]** |
|---|---|---|---|---|---|
| | | | **feucht** | **trocken** | |
| | | | | | |
| V1 | Benzoylperoxid | DipPt | 0,1 | 2,4 | 19,7 |
| V2¹⁾ | Benzoylperoxid | DipPt | 0,07 | 1,0 | 31,2 |
| V3²⁾ | | | 0,9 | 3,9 | 36,3 |
| | | | | | |
| 1 | *tert*-Butylperoxybenzoat | Kupfernaphthenat / 2-Methylpentamethylendiamin | 0,2 | 4,2 | 26,8 |
| 2 | *tert*-Butylperoxybenzoat | Vanadylpentandionat / N-Benzoylthiourea | 4,3 | 4,8 | 26,2 |
| 3 | *tert*-Butylperoxybenzoat | Kupfernaphthenat / Vanadylpentandionat / N-Benzoylthiourea | 0,5 | 4,5 | 34,5 |
| 4 | Cumylhydroperoxid | Na-Acetattrihydrat / 3,4-Hexandion | 2,4 | 4,2 | 34,8 |
| 5 | *tert*-Butylhydroperoxid | Kupfernaphthenat / Na-Acetattrihydrat / 3,4-Hexandion | 1,4 | 4,5 | 20,7 |
| 6 | Acetylacetonperoxid | Na-Acetattrihydrat / 3,4-Hexandion | 0,35 | 3,28 | 7,2 |
| 7 | Acetylaceton peroxid | Vanadylpentandionat / N-Benzoylthiourea | 2,9 | 5,9 | 28,5 |

| | | | | | |
|---|---|---|---|---|---|
| ¹⁾ HY200A; ²⁾ RE700 (Epoxy-Amin-System) | | | | | |

Wie die Werte in Tabelle 2 zeigen, wurden mit den erfindungsgemäßen Zusammensetzungen auf feuchtem Beton Haftfestigkeitswerte zwischen 0,2 (Beispiel 1) und 4,3 MPa (Beispiel 2) und auf trockenem Beton Haftfestigkeitswerte zwischen 3,28 (Beispiel 6) und 5,9 MPa (Beispiel 7) gemessen.

Damit konnte mit den erfindungsgemäßen Zusammensetzungen Werte für die Haftfestigkeit auf trockener Betonoberfläche erreicht werden, die im Bereich des Epoxid-Amin basierten Systems (Vergleichsbeispiel V3) liegen und diese sogar zum Teil übertreffen. Auf feuchten Untergründen konnten mit den erfindungsgemäßen Zusammensetzungen Werte für die Haftfestigkeit erreicht werden, die gegenüber den Vergleichssystemen, und somit auch gegenüber den für ihre hohe Haftfestigkeit bekannten Systeme auf Epoxy-Amin-Basis zum Teil mehr als doppelte so hoch waren.

Die Werte zeigen, dass durch die Verwendung von Peroxiden, die in flüssiger Form eingesetzt werden, die Haftfestigkeiten sowohl auf feuchten als auch auf trockenem Beton zum Teil deutlich verbessert werden konnten, insbesondere auch gegenüber den Reaktivharzsystemen auf Epoxid-Amin-Basis, welches für seine guten Haftfestigkeiten auch auf feuchtem Beton bekannt ist.

## Patentansprüche

1. Härterzusammensetzung für ein Reaktivharzsystem zur chemischen Befestigung auf Basis einer radikalisch härtbaren ungesättigten Verbindung umfassend
- ein Härtungsmittel für die radikalisch härtbare ungesättigte Verbindung,
- eine Verbindung, die aus der Gruppe bestehend aus Thiolen, Thioharnstoffen und bifunktionellen, primären aliphatischen Aminen ausgewählt ist, und
- ein Metall, in elementarer Form oder in Form einer Metallverbindung,
**dadurch gekennzeichnet, dass**
das Härtungsmittel ein Peroxid ist, welches entweder flüssig ist oder in einem organischen Lösungsmittel gelöst vorliegt.

2. Härterzusammensetzung nach Anspruch 1, **dadurch gekennzeichnet, dass** das Peroxid aus der Gruppe bestehend aus Di-iso-butyrylperoxid, 2,5-Dimethyl-2,5-di(2-ethylhexanoylperoxy)hexan, 2,2-Di-(tert-butylperoxy)butan, 2,5-Dimethyl-2,5-di-tert-butylperoxy)hexan, *tert*-Butylcumylperoxid, 2,5-Dimethyl-2,5-di(tert-butylperoxy)hexyn-3, Di(3,5,5-trimethylhexanoyl)peroxid, Di-tert-butylperoxid, Di-tert-amylperoxid, Cumolperoxyneodecanoat, Cumolperoxyneoheptanoat, 1,1,3,3-Tetramethylbutylperoxyneodecanoat, Di-*iso*-propylperoxydecanoat, *tert-*Amylperoxyneodecanoat, tert-Amylperoxybenzoat, tert-Butylperoxyneodecanoat, 1,1,3,3-Tetramethylbutylperoxy-2-ethylhexanoat, *tert*-Amylperoxy-2-ethylhexanoat, *tert*-Butylperoxy-2-ethylhexanoat, tert-Butylperoxyneoheptanoat, *tert*-Butylperoxy-3,5,5-trimethylhexanoat, *tert*-Butylperoxyacetat, *tert-*Butylperoxydiethylacetat, *tert*-Amylperoxyacetat, *tert*-Butylperoxyisobutyrat, Butyl-4,4-di(*tert*-butylperoxy)valerat, *tert*-Butylperoxybenzoat, 1,1,3,3-Tetramethylbutylperoxypivalat, *tert*-Amylperoxypivalat, *tert*-Butylperoxypivalat, *tert*-Butylperoxy-*iso-*propylcarbonat, *tert*-Butylperoxy-2-ethylhexylcarbonat, *tert-*Amylperoxy-2-ethylhexylcarbonat, Di-butylperoxydicarbonat wie Di-n-butylperoxydicarbonat und Di-sec-buylperoxydicarbonat, Di-(2-ethylhexyl)peroxydicarbonat, Di-n-propylperoxydicarbonat, 1,1-Di-(tert-butylperoxy)cyclohexan, 1,1-Di(*tert*-butylperoxy)-3,3,5-trimethylcyclohexan, 1,1-Di(tert-amylperoxy)cyclohexan, *tert*-Butylhydroperoxid, *tert*-Amylhydroperoxid, *p-*Menthanhydroperoxid, Cumolhydroperoxid, 1,1,3,3-Tetramethylbutylhydroperoxid, *iso*-Propylcumolhydroperoxid Di-*iso-*propylbenzol-mono-hydroperoxid, 3,6,9-Triethyl-3,6,9-trimethyl-1,4,7-triperoxonan und 3,3,5,7,7-Pentamethyl-1,2,4-trioxepan ausgewählt ist.

3. Härterzusammensetzung nach Anspruch 1 oder 2, wobei die Härterzusammensetzung ferner ein weiteres Additiv, ausgewählt unter Emulgatoren, Frostschutzmitteln, Puffern, Rheologieadditiven, Füllstoffen und Mischungen davon enthalten.

4. Härterzusammensetzung nach einem der vorhergehenden Ansprüche 1 bis 3, wobei das Peroxid in einer Menge von 2 bis 50 Gew.-%, bezogen auf die Härterzusammensetzung, enthalten ist.

5. Mehrkomponentiges Reaktivharzsystem mit einer Harzkomponente, umfassend eine radikalisch härtbare ungesättigte Verbindung, und mit einer Härterkomponente, die eine Härterzusammensetzung nach einem der Ansprüche 1 bis 4 umfasst.

6. Mehrkomponentiges Reaktivharzsystem nach Anspruch 5, wobei die radikalisch härtbare ungesättigte Verbindung wenigstens ein Reaktivharz, wenigstens einen Reaktivverdünner oder eine Mischung aus wenigstens einem Reaktivharz und einem Reaktivverdünner umfasst.

7. Mehrkomponentiges Reaktivharzsystem nach Anspruch 6, wobei das Reaktivharz eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen ist.

8. Mehrkomponentiges Reaktivharzsystem nach einem der Ansprüche 5 bis 7, wobei die Harzkomponenten fernen einen anorganischen Zuschlagstoff umfasst.

9. Mehrkomponentiges Reaktivharzsystem nach einem der Ansprüche 5 bis 8, wobei die Harzkomponente ferner einen Inhibitor umfasst.

10. Mehrkomponentiges Reaktivharzsystem nach einem der Ansprüche 5 bis 9, wobei das Reaktivharzsystem ein Zweikomponenten-Beutelsystem ist.

11. Verwendung einer Härterzusammensetzung nach einem der Ansprüche 1 bis 4 zur Verbesserung der Haftung eines ausgehärteten Reaktivharzsystems auf Basis einer radikalisch härtbaren ungesättigten Verbindung auf mineralischen Oberflächen.

12. Verwendung nach Anspruch 11 zur Verbesserung der Haftung eines ausgehärteten Reaktivharzsystems auf Basis einer radikalisch härtbaren ungesättigten Verbindung auf feuchten mineralischen Oberflächen.
